# EUROPÄISCHE PATENTANMELDUNG

(11) **EP 1 445 966 A1**
(43) Veröffentlichungstag der Anmeldung: **11.08.2004**
(21) Anmeldenummer: 03090033.6
(22) Anmeldetag: 06.02.2003
(51) Int. Cl.: H04Q 7/22, H04M 17/00, H04L 12/58

(54) **Übertragung von teilnehmerbezogenen Informationen an ein Kommunikationsendgerät durch einen Präsenzrechner**

(71) Anmelder: SIEMENS AKTIENGESELLSCHAFT, 80333 München (DE)
(72) Erfinder: Ryll, Frank, 13156 Berlin (DE)

(57) **Zusammenfassung**

Die Erfindung betrifft ein Verfahren zum Übertragen von Eigen-Informationen über bei einem Netzelement (MB,SCP,GE,SMSC) eines Telekommunikationsnetzes (TKN) gespeicherte, einen Nutzer des Telekommunikationsnetzes betreffende Daten an ein Kommunikationsendgerät (KEG) des Nutzers, bei dem von dem Netzelement des Telekommunikationsnetzes diese Eigen-Informationen an einen Präsenzrechner (PR) eines Präsenzdienstes übertragen (EIN1,EIN3,EIN1',EIN3') werden, von dem Präsenzrechner die Eigen-Informationen gespeichert werden, und von dem Präsenzrechner die Eigen-Informationen zu dem Kommunikationsendgerät des Nutzers übertragen (EIN2,EIN2') werden unter Nutzung eines für eine Übertragung von Präsenzinformationen des Präsenzrechners zu dem Kommunikationsendgerät vorgesehenen Übertragungsweges.

## Beschreibung

Die Erfindung betrifft ein Verfahren zum Übertragen von Eigen-Informationen über bei einem Netzelement eines Telekommunikationsnetzes gespeicherte, einen Nutzer des Telekommunikationsnetzes betreffende Daten an ein Kommunikationsendgerät des Nutzers. Unter Eigen-Informationen des Nutzers werden solche Informationen verstanden, die dem Nutzer selbst zugehörige und/oder bei Netzelementen für den Nutzer gespeicherte Daten des Telekommunikationsnetzes betreffen.

Ein derartiges Verfahren ist aus der internationalen Patentanmeldung WO 00/19702 bekannt. Bei diesem bekannten Verfahren werden als Eigen-Informationen Informationen über einen Kontostand eines Guthabenkontos (Prepaid-Kontos) eines Nutzers eines Mobilfunknetzes mittels einer Kurztextnachricht (SMS-Nachricht = Short Message Service-Nachricht) an ein Mobiltelefon des Nutzers übertragen und auf einer Anzeige dieses Mobiltelefons dargestellt. Diese Eigen-Informationen betreffen Kontostandsdaten, welche in einer Datenbank eines Dienstesteuerungspunktes des Telekommunikationsnetzes gespeichert sind.

Der Erfindung liegt die Aufgabe zugrunde, ein besonders einfach zu realisierendes und kostengünstiges Verfahren zum Übertragen von Eigen-Informationen an ein Kommunikationsendgerät eines Nutzers anzugeben.

Diese Aufgabe wird bei einem Verfahren der eingangs angegebenen Art erfindungsgemäß dadurch gelöst, dass von dem Netzelement des Telekommunikationsnetzes diese Eigen-Informationen an einen Präsenzrechner eines Präsenzdienstes übertragen werden, von dem Präsenzrechner die Eigen-Informationen gespeichert werden, und von dem Präsenzrechner die Eigen-Informationen zu dem Kommunikationsendgerät des Nutzers übertragen werden unter Nutzung eines für eine Übertragung von Präsenzinformationen des Präsenzrechners zu dem Kommunikationsendgerät vorgesehenen Übertragungsweges des Telekommunikationsnetzes.

Präsenzrechner als solche sind bekannt und werden zur Erbringung von sog. Präsenzdiensten eingesetzt. Solche Präsenzdienste und die dazu verwendeten Präsenzserver sind in der Druckschrift "3GGP TS 23.141, 3^{rd} Generation Partnership Project; Technical Specification Group Services and System Aspects; Presence Service; Architecture and Functional Description" beschrieben. Bei dem bekannten Präsenzdienst dient der Präsenzrechner dazu, Präsenzinformationen über zu überwachende Mobiltelefone bzw. über zugehörige Mobilfunkkunden (sog. "Presentities") zu empfangen, vorzuhalten und an einen Nutzer des Präsenzdienstes zu übertragen, welcher die Übertragung der Präsenzinformationen abonniert hat.

Bei dem erfindungsgemäßen Verfahren ist besonders vorteilhaft, dass ein an sich bekannter Präsenzrechner, der nach dem Stand der Technik zum Vorhalten von Präsenzinformationen über zu überwachende Kommunikationsendgeräte weiterer Telekommunikationsnutzer und zur Übertragung solcher Präsenzinformationen vorgesehen ist, auch für einen völlig anderen Zweck verwendet wird, nämlich dazu, die Eigen-Informationen an das Kommunikationsendgerät des Nutzers zu übertragen. Es ist ebenfalls vorteilhaft, dass die Eigen-Informationen unter Nutzung von bereits bekannten Übertragungswegen des Telekommunikationsnetzes, welche zur Übertragung der Präsenzinformationen vorgesehen sind, zu dem Telekommunikationsendgerät des Nutzers übertragen werden. Durch die Nutzung des bereits bekannten Präsenzrechners und der bereits bekannten, für Präsenzinformationen vorgesehenen Übertragungswege lässt sich das erfindungsgemäße Verfahren einfach in die Praxis umsetzen und sehr kostengünstig gestalten.

Das erfindungsgemäße Verfahren kann so ausgestaltet sein, dass die Eigen-Informationen gemeinsam mit den Präsenzinformationen zu dem Kommunikationsendgerät übertragen werden. Dabei können die Eigen-Informationen und die Präsenzinformationen in gemeinsam genutzten Datenpaketen zu dem Kommunikationsendgerät übertragen werden. Bei diesen beiden Ausgestaltungsmöglichkeiten des erfindungsgemäßen Verfahrens wird vorteilhafterweise zusätzlich neben einer sowieso für die Übertragung der Präsenzinformationen erforderlichen Übertragungskapazität keine weitere oder nur eine geringe weitere Übertragungskapazität für die Eigen-Informationen benötigt.

Das erfindungsgemäße Verfahren kann auch so ausgestaltet sein, dass die Eigen-Informationen und die Präsenzinformationen jeweils in eigenen Datenpaketen zu dem Kommunikationsendgerät übertragen werden. Damit kann vorteilhaft erreicht werden, dass auch zu jeweils verschiedenen Zeitpunkten zu übertragende Eigen-Informationen und Präsenzinformationen ohne Zeitverzug zu dem Kommunikationsendgerät übertragen werden.

Das erfindungsgemäße Verfahren kann so ablaufen, dass von dem Kommunikationsendgerät verfahrenseinleitend eine erste Konfigurationsnachricht zu dem Präsenzrechner übertragen wird, durch die die Art der von dem Präsenzrechner zu dem Kommunikationsendgerät zu übertragenden Eigen-Informationen festgelegt wird. Damit kann vorteilhafterweise schon bei Beginn des Verfahrens von Seiten des Kommunikationsendgerätes ausgewählt werden, welche Eigen-Informationen über welche Nutzer-Daten zu dem Kommunikationsendgerät übertragen werden sollen.

Das erfindungsgemäße Verfahren kann so ablaufen, dass die Eigen-Informationen durch den Präsenzrechner von dem Netzelement des Telekommunikationsnetzes abgefragt werden, und daraufhin diese abgefragten Eigen-Informationen von dem Netzelement zu dem Präsenzrechner übertragen werden. Damit kann vorteilhaft der Zeitpunkt der Abfrage der Eigen-Informationen und damit ein Aktualisierungszeitpunkt durch den Präsenzrechner festgelegt werden. Bei dieser Ausgestaltungsform des Verfahrens braucht auf Seiten der Netzelemente kein Aufwand für eine rechtzeitige Übertragung der Eigen-Informationen getroffen zu werden; die Netzelemente brauchen lediglich auf die Anfragen des Präsenzrechners zu antworten.

Das erfindungsgemäße Verfahren kann auch so ablaufen, dass bei einer Änderung der in dem Netzelement gespeicherten Daten von dem Netzelement selbsttätig die Eigen-Informationen über die gespeicherten Daten zu dem Präsenzrechner übertragen werden. Bei dieser Ausgestaltungsform des erfindungsgemäßen Verfahrens werden die Eigen-Informationen des Präsenzrechners stets auf einem aktuellen Stand gehalten; unnötige Eigen-Informationsübertragungen zwischen dem Netzelement und dem Präsenzrechner werden vermieden.

Bei dem erfindungsgemäßen Verfahren kann von dem Kommunikationsendgerät verfahrenseinleitend eine zweite Konfigurationsnachricht zu dem Netzelement übertragen werden, durch die die Art der bei der Änderung der Daten von dem Netzelement zu dem Präsenzrechner zu übertragenden Eigen-Informationen festgelegt wird. Dadurch werden vorteilhafterweise nur solche Eigen-Informationen zu dem Präsenzrechner übertragen, die von Seiten des Kommunikationsendgerätes benötigt werden. Dies schont die Ressourcen des Telekommunikationsnetzes.

Bei dem erfindungsgemäßen Verfahren kann als Netzelement eine Kontenverwaltungseinrichtung eines Kontos des Nutzers verwendet werden, und als Eigen-Information eine Kontostandsinformation über die Höhe eines Kontostandes des Kontos übertragen werden. Dabei kann als Konto ein Guthabenkonto verwendet werden.

Das erfindungsgemäße Verfahren kann auch so ablaufen, dass als Netzelement eine Gebührenerfassungseinrichtung verwendet wird, welche bei der Telekommunikation auftretende Gebühren des Nutzers erfasst, und als Eigen-Information eine Gebühreninformation über die Höhe der aufgetretenen Gebühren übertragen wird.

Bei einer weiteren Ausgestaltungsform des erfindungsgemäßen Verfahrens kann als Netzelement ein Nachrichtenspeicher für an den Nutzer adressierte Nachrichten verwendet werden, und als Information eine Information über in dem Nachrichtenspeicher für den Nutzer gespeicherte Nachrichten übertragen werden.

Das erfindungsgemäße Verfahren kann auch so ausgestaltet sein, dass die Eigen-Informationen vor deren Übertragung zu dem Kommunikationsendgerät durch den Präsenzrechner derart aufbereitet werden, dass sie mittels eines Präsenzdaten-Ausgabeprogramms durch das Kommunikationsendgerät ausgebbar sind. Hierbei ist besonders vorteilhaft, dass auf Seiten des Kommunikationsendgerätes das dort für die Ausgabe der Präsenzdaten vorgesehene Präsenzdaten-Ausgabeprogramm parallel zu seiner eigentlichen Funktion auch für einen völlig anderen Zweck verwendet werden kann, nämlich dazu, die Eigen-Informationen über die die Nutzer betreffenden Daten auszugeben. Dadurch ist für die Ausgabe der Eigen-Informationen kein eigenes Ausgabeprogramm notwendig.

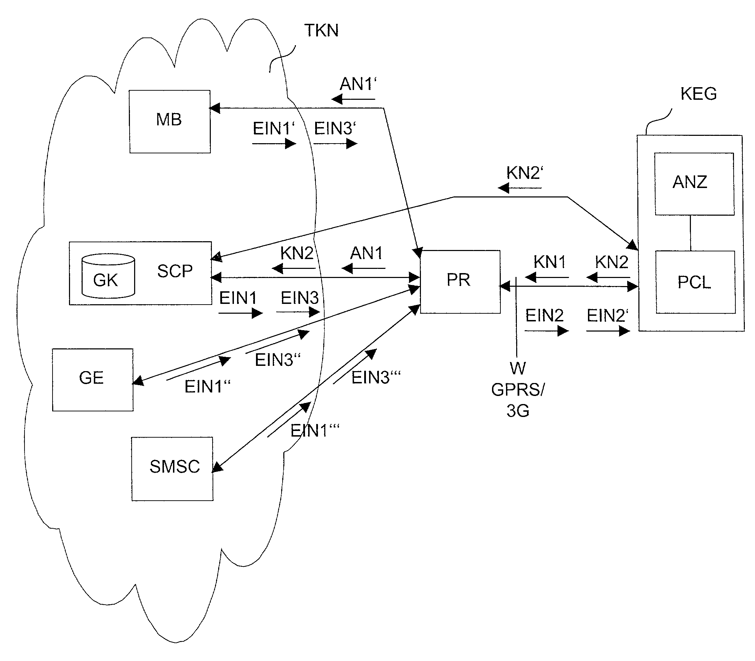

Zur weiteren Erläuterung der Erfindung ist in der einzigen Figur ein Ausführungsbeispiel von Verfahrensschritten des erfindungsgemäßen Verfahrens dargestellt.

In der Figur ist schematisch ein Telekommunikationsnetz TKN dargestellt, bei dem es sich beispielsweise um ein Mobiltelefonnetz, ein Telefonfestnetz, ein Intranet oder auch um einen Teil des weltweiten Internets handeln kann. Von dem Telekommunikationsnetz TKN sind lediglich erfindungswesentliche Netzelemente dargestellt. Ein derartiges Netzelement wird im Ausführungsbeispiel von einer Kontenverwaltungseinrichtung SCP dargestellt, welche von einem Dienstesteuerungspunkt (SCP = Service Control Point) gebildet wird. Das Telekommunikationsnetz weist dabei eine Struktur eines Intelligenten Netzes (IN = Intelligent Network) auf. Diese Kontenverwaltungseinrichtung SCP weist eine Speichereinrichtung GK auf, in der Daten über ein Guthabenkonto eines Nutzers des Telekommunikationsnetzes abgespeichert sind. Der Nutzer verfügt über ein Kommunikationsendgerät KEG, mittels dessen er die Dienste des Telekommunikationsnetzes TKN nutzt. Ein derartiges Kommunikationsendgerät kann beispielsweise ein Mobiltelefon, ein Festnetztelefon, ein tragbarer Rechner mit Mobiltelefonschnittstelle oder auch ein stationäres Computerterminal sein.

Das Guthabenkonto GK kann auch in einem separaten Datenspeicher geführt werden, welcher mit der Kontenverwaltungseinrichtung SCP verbunden ist und von dieser verwaltet wird. Die im Zusammenhang mit dem Guthabenkonto gespeicherten Guthaben- bzw. Kontostandsdaten betreffen unmittelbar den Nutzer des Kommunikationsendgerätes KEG, denn dieses Guthabenkonto GK stellt das Konto dar, über das die Nutzung des Telekommunikationsnetzes durch das Kommunikationsendgerät KEG abgerechnet wird.

Als weiteres Netzelement des Telekommunikationsnetzes TKN ist eine Gebührenerfassungseinrichtung GE dargestellt, bei der diejenigen Telekommunikationsgebühren erfasst werden, welche bei der Nutzung der Dienste und Leistungen des Telekommunikationsnetzes durch das Kommunikationsendgerät KEG auftreten. Eine solche Gebührenerfassungseinrichtung kann beispielsweise durch die in Telefonnetzen bekannten Gebührenerfassungseinrichtungen gebildet werden, welche von Vermittlungsstellen der Telefonnetze sog. Call-Data-Records (CDR) erhalten und anhand dieser CDR-Datensätze die bereits aufgelaufenen Gebühren feststellen und z. B. für eine spätere Rechnungserstellung speichern. Bei einer solchen Gebührenerfassungseinrichtung GE sind also die im Zusammenhang mit der Kommunikation des Kommunikationsendgerätes aufgetretenen Gebühren in Form von Gebührendaten des Kommunikationsendgerätes KEG bzw. in Form von dem Nutzer des Kommunikationsendgerätes KEG zugeordneten Gebührendaten gespeichert.

Als weiteres Netzelement ist ein Nachrichtenspeicher SMSC in Form eines sog. Kurzmitteilungs-Servicezentrums (SMSC = Short Message Service Center) dargestellt. In einem solchen Servicezentrum werden an das Kommunikationsendgerät KEG bzw. an dessen Nutzer gerichtete Textnachrichten bis zu einer Übertragung an das Kommunikationsendgerät KEG zwischengespeichert. Diese Kurztextnachrichten stellen ebenfalls Daten dar, welche den Nutzer des Kommunikationsnetzes betreffen.

Als ein weiterer Nachrichtenspeicher des Telekommunikationsnetzes TKN ist eine Mailbox MB dargestellt, in der an den Nutzer des Telekommunikationsnetzes gerichtete Email-Nachrichten in Form von Nachrichten-Daten gespeichert werden.

In dem Kommunikationsendgerät KEG des Nutzers des Telekommunikationsnetzes ist ein sog. "Präsenz-Client" PCL in Form einer Hardware-Schaltung oder in Form eines Software-Programms realisiert. Über diesen Präsenz-Client PCL kann der Nutzer des Telekommunikationsendgerätes mittels der Bedienelemente des Kommunikationsendgerätes schon vor Beginn des eigentlichen Verfahrens die prinzipiellen Typen bzw. Arten von Eigen-Informationen auswählen, die für ihn interessant sind. Daraufhin wird von dem Präsenz-Client PCL des Kommunikationsendgerätes KEG verfahrenseinleitend eine erste Konfigurationsnachricht KN1 an einen Präsenzrechner PR übertragen, der mit dem Telekommunikationsnetz TKN verbunden ist. Alternativ kann der Präsenzrechner PR auch einen Teil des Telekommunikationsnetzes TKN bilden.

Mittels dieser ersten Konfigurationsnachricht KN1 wird festgelegt, welche Art an Eigen-Informationen bei dem Kommunikationsendgerät KEG benötigt werden. Im Ausführungsbeispiel kann die Art der Eigen-Informationen durch das Kommunikationsendgerät KEG derart festgelegt werden, dass Kontostandsinformationen über den Stand des Guthabenkontos GK sowie Informationen (z. B. Absender, Anzahl) über jeweils nach 18 Uhr eingehende Emails, welche in der Mailbox MB gespeichert werden, zu dem Kommunikationsendgerät KEG übertragen werden sollen. Daraufhin fragt der Präsenzrechner PR mittels einer ersten Abfragenachricht AN1 die Eigen-Informationen des Guthabenkontos von der Kontenverwaltungseinrichtung SCP ab. Die Kontoverwaltungseinrichtung SCP liest aus dem Guthabenkonto GK den Kontostand in Form von Kontostandsdaten aus, ermittelt aus diesen Kontostandsdaten (beispielsweise durch Umrechnung in eine Geldwährung) die Eigen-Informationen des Kontostandes und sendet mittels einer ersten Eigeninformationsnachricht EIN1 diese Eigen-Informationen des Guthabenkontos an den Präsenzrechner PR zurück. Von dem Präsenzrechner werden diese Eigen-Informationen gespeichert und derart aufbereitet (z. B. durch Formatierung für ein gängiges Anzeigeformat oder Konvertierung in ein gängiges Datenformat), dass sie später von einem Präsenzdaten-Ausgabeprogramm des Präsenz-Clients PCL des Kommunikationsendgerätes KEG ausgegeben werden können. Die derart aufbereiteten Eigen-Informationen werden mittels einer zweiten Eigeninformationsnachricht EIN2 von dem Präsenzrechner PR zu dem Kommunikationsendgerät KEG übertragen. Dabei wird ein Übertragungsweg W des Kommunikationsnetzes verwendet, welcher ursprünglich dazu vorgesehen war, Präsenzinformationen von dem Präsenzrechner zu dem Präsenz-Client des Kommunikationsendgerätes zu übertragen. Dies hat den Vorteil, dass für die Eigeninformationsnachrichten keine weiteren Übertragungswege geschaffen werden müssen. Auch dadurch kann das erfindungsgemäße Verfahren mit geringem Aufwand und sehr kostengünstig realisiert werden. Die für die Übertragung der Präsenzinformationen vorgesehenen Übertragungswege können auf einer paketorientierten und verbindungslosen Übertragung basieren und beispielsweise unter Nutzung der GPRS-Technologie (GPRS = General Packet Radio Service) oder einer anderen, der dritten Generation (3G) von Mobilfunkdatenübertragungstechniken zugehörigen Technologie realisiert sein.

Die aufbereiteten Eigen-Informationen können vorzugsweise gemeinsam mit von dem Präsenzrechner sowieso zu dem Präsenz-Client des Kommunikationsendgerätes zu übertragenden Präsenzinformationen übertragen werden. Dies kann z. B. dadurch geschehen, dass die zweite Eigeninformationsnachricht EIN2 neben den Eigen-Informationen auch Präsenzinformationen enthält. Die Präsenzinformationen werden dann unabhängig von den Eigen-Informationen von dem Präsenz-Client des Kommunikationsendgerätes KEG ausgelesen und ausgewertet. Beispielsweise können die Eigen-Informationen und die Präsenzinformationen in gemeinsam genutzten Datenpaketen zu dem Kommunikationsendgerät KEG übertragen werden, wenn die zweite Eigeninformationsnachricht EIN2 mittels einer paketorientierten Datenübertragungstechnik zu dem Kommunikationsendgerät KEG übertragen wird. Für die Übertragung der Eigen-Informationen und der Präsenzinformationen zu dem Kommunikationsendgerät können aber auch jeweils eigene Datenpakete verwendet werden.

Zusätzlich oder alternativ zu der vorgehend beschriebenen ersten Konfigurationsnachricht KN1 kann von dem Kommunikationsendgerät zur Einleitung des Verfahrens eine zweite Konfigurationsnachricht KN2 über den Präsenzrechner PR zu der Kontenverwaltungseinrichtung SCP übertragen werden. Die zweite Konfigurationsnachricht KN2 kann jedoch auch auf direktem Wege von dem Kommunikationsendgerät KEG zu der Kontenverwaltungseinrichtung SCP übertragen werden unter Umgehung des Präsenzrechners PR, ein Beispiel für eine derartige zweite Konfigurationsnachricht ist in der Figur mit KN2' bezeichnet. Die Kontenverwaltungseinrichtung SCP wird jedoch auch in diesem Fall die Eigen-Informationen an den Präsenzrechner PR übertragen, welcher dann für die Weiterleitung an das Kommunikationsendgerät KEG sorgt.

Durch diese zweite Konfigurationsnachricht KN2 wird das Netzelement (in diesem Fall die Kontenverwaltungseinrichtung SCP) aufgefordert, bei einer Änderung der in der Kontenverwaltungseinrichtung gespeicherten Guthabenkontendaten selbsttätig die Eigen-Informationen über diese Guthabenkontendaten zu ermitteln und mittels einer dritten Eigeninformationsnachricht EIN3 zu dem Präsenzrechner zu übertragen. Durch die zweite Konfigurationsnachricht KN2 kann die Art der bei einer Datenänderung zu übertragenden Eigen-Informationen festgelegt werden. Sobald die selbsttätig mittels der Eigeninformationsnachricht EIN3 an den Präsenzrechner übermittelten Eigen-Informationen bei dem Präsenzrechner eintreffen, werden diese auf die oben beschriebene Art und Weise weiterverarbeitet bzw. aufbereitet und an das Kommunikationsendgerät KEG übermittelt.

Analog zu den bisher beschriebenen Verfahrensschritten können auch von den weiteren Netzelementen Eigen-Informationen ermittelt und entweder auf Abfrage durch den Präsenzrechner (z. B. auf eine an die Mailbox gerichtete Abfragenachricht AN1' hin) oder auch selbsttätig durch die Netzelemente zu dem Präsenzrechner übermittelt (Eigeninformationsnachrichten EIN1',EIN1",EIN1"',EIN3',EIN3",EIN3"') werden.

Nachdem die Eigen-Informationen (beispielsweise mittels der oben genannten zweiten Eigeninformationsnachrichten EIN2 oder mittels einer auf die Eigeninformationsnachricht EIN1' hin erzeugten Eigeninformationsnachricht EIN2') zu dem Kommunikationsendgerät KEG übertragen worden sind, werden diese Eigen-Informationen von dem Präsenz-Client PCL aus der Eigeninformationsnachricht EIN2 ausgelesen, formatiert und beispielsweise auf einer Anzeige des Kommunikationsendgerätes ausgegeben. Alternativ kann von einem Sprachgenerator des Kommunikationsendgerätes auch eine Sprachnachricht erzeugt werden, welche über eine akustische Ausgabeeinheit (z. B. einen Lautsprecher) des Kommunikationsendgerätes ausgegeben wird.

Bei dem erfindungsgemäßen Verfahren ist von besonderem Vorteil, dass die zur Erbringung eines bekannten Präsenzdienstes vorgesehenen Präsenzrechner, die zur Übertragung von Präsenzinformationen vorgesehenen Übertragungswege des Telekommunikationsnetzes und der Präsenz-Client des Kommunikationsendgerätes auch dazu genutzt wird, Eigen-Informationen zu übertragen. Diese Eigen-Informationen betreffen Daten des Nutzers des Kommunikationsendgerätes, welche bei Netzelementen des Telekommunikationsnetzes gespeichert sind. Die genannten, zur Realisierung des Präsenzdienstes vorgesehenen Anordnungen und Verfahren werden erfindungsgemäß gleichzeitig für die Anforderung, Übermittlung und Darstellung von Eigen-Informationen des Nutzers (beispielsweise in Form von Kontostandsinformationen oder Informationen über für den Nutzer vorliegende Nachrichten) genutzt. Diese Eigen-Informationen können zusammen mit den Präsenzinformationen oder auch getrennt von diesen bei dem Kommunikationsendgerät dargestellt oder ausgegeben werden. Insbesondere bei der Nutzung von paketorientierten und verbindungslosen Nachrichtenübertragungswegen bzw. - mechanismen zur Übertragung der Eigen-Informationen zu dem Kommunikationsendgerät ergeben sich besonders niedrige Betriebskosten bei der Realisierung des erfindungsgemäßen Verfahrens. Durch die Nutzung der ursprünglich zur Übertragung von Präsenzinformationen vorgesehenen Datenübertragungswege sowie des Präsenzrechners für die Übertragung von Eigen-Informationen treten darüber hinaus nur sehr geringe Investitionskosten für das erfindungsgemäße Verfahren auf.

Die Übertragung und die Anzeige der Eigen-Informationen können in Echtzeit erfolgen. Führt ein Nutzer des Mobiltelefons KEG z. B. ein Telefongespräch, so kann er gesprächsbegleitend anhand der vom Mobiltelefon ausgegebenen Kontostands-Eigen-Informationen verfolgen, wie sich sein Guthaben verringert.

## Patentansprüche

1. Verfahren zum Übertragen von Eigen-Informationen über bei einem Netzelement (MB,SCP,GE,SMSC) eines Telekommunikationsnetzes (TKN) gespeicherte, einen Nutzer des Telekommunikationsnetzes (TKN) betreffende Daten an ein Kommunikationsendgerät (KEG) des Nutzers,
**dadurch gekennzeichnet, dass**
- von dem Netzelement (MB,SCP,GE,SMSC) des Telekommunikationsnetzes (TKN) diese Eigen-Informationen an einen Präsenzrechner (PR) eines Präsenzdienstes übertragen (EIN1,EIN3,EIN1',EIN3') werden,
- von dem Präsenzrechner (PR) die Eigen-Informationen gespeichert werden, und
- von dem Präsenzrechner die Eigen-Informationen zu dem Kommunikationsendgerät (KEG) des Nutzers übertragen (EIN2,EIN2') werden unter Nutzung eines für eine Übertragung von Präsenzinformationen des Präsenzrechners (PR) zu dem Kommunikationsendgerät (KEG) vorgesehenen Übertragungsweges (W).

2. Verfahren nach Anspruch 1,
**dadurch gekennzeichnet, dass**
- die Eigen-Informationen gemeinsam mit den Präsenzinformationen zu dem Kommunikationsendgerät (KEG) übertragen (EIN2) werden.

3. Verfahren nach Anspruch 2,
**dadurch gekennzeichnet, dass**
- die Eigen-Informationen und die Präsenzinformationen in gemeinsam genutzten Datenpaketen (GPRS) zu dem Kommunikationsendgerät (KEG) übertragen (EIN2) werden.

4. Verfahren nach Anspruch 1,
**dadurch gekennzeichnet, dass**
- die Eigen-Informationen und die Präsenzinformationen jeweils in eigenen Datenpaketen (GPRS) zu dem Kommunikationsendgerät (KEG) übertragen (EIN2) werden.

5. Verfahren nach einem der vorhergehenden Ansprüche,
**dadurch gekennzeichnet, dass**
- von dem Kommunikationsendgerät (KEG) verfahrenseinleitend eine erste Konfigurationsnachricht (KN1) zu dem Präsenzrechner (PR) übertragen wird, durch die die Art der von dem Präsenzrechner (PR) zu dem Kommunikationsendgerät (KEG) zu übertragenden Eigen-Informationen festgelegt wird.

6. Verfahren nach einem der vorhergehenden Ansprüche,
**dadurch gekennzeichnet, dass**
- die Eigen-Informationen durch den Präsenzrechner (PR) von dem Netzelement (SCP) des Telekommunikationsnetzes (TKN) abgefragt (AN1) werden, und
- daraufhin diese abgefragten Eigen-Informationen von dem Netzelement zu dem Präsenzrechner übertragen (EIN1) werden.

7. Verfahren nach einem der vorhergehenden Ansprüche,
**dadurch gekennzeichnet, dass**
- bei einer Änderung der in dem Netzelement (SCP) gespeicherten Daten (GK) von dem Netzelement (SCP) selbsttätig die Eigen-Informationen über die gespeicherten Daten zu dem Präsenzrechner übertragen (EIN3) werden.

8. Verfahren nach Anspruch 7,
**dadurch gekennzeichnet, dass**
- von dem Kommunikationsendgerät (KEG) verfahrenseinleitend eine zweite Konfigurationsnachricht (KN2) zu dem Netzelement (SCP) übertragen wird, durch die die Art der bei der Änderung der Daten von dem Netzelement (SCP) zu dem Präsenzrechner (PR) zu übertragenden (EIN3) Eigen-Informationen festgelegt wird.

9. Verfahren nach einem der vorhergehenden Ansprüche,
**dadurch gekennzeichnet, dass**
- als Netzelement eine Kontenverwaltungseinrichtung (SCP) eines Kontos (GK) des Nutzers verwendet wird, und
- als Eigen-Informationen eine Kontostandsinformation über die Höhe eines Kontostandes des Kontos (GK) übertragen (EIN1,EIN3) wird.

10. Verfahren Anspruch 9,
**dadurch gekennzeichnet, dass**
- als Konto ein Guthabenkonto (GK) verwendet wird.

11. Verfahren nach einem der vorhergehenden Ansprüche,
**dadurch gekennzeichnet, dass**
- als Netzelement eine Gebührenerfassungseinrichtung (GE) verwendet wird, welche bei der Telekommunikation auftretende Gebühren des Nutzers erfasst, und
- als Eigen-Informationen eine Gebühreninformation über die Höhe der aufgetretenen Gebühren übertragen (EIN1",EIN3") wird.

12. Verfahren nach einem der vorhergehenden Ansprüche,
**dadurch gekennzeichnet, dass**
- als Netzelement ein Nachrichtenspeicher (SMSC,MB) für an den Nutzer adressierte Nachrichten verwendet wird, und
- als Eigen-Informationen eine Information über in dem Nachrichtenspeicher für den Nutzer gespeicherte Nachrichten übertragen (EIN1',EIN3',EIN1"',EIN3"')wird.

13. Verfahren nach einem der vorhergehenden Ansprüche,
**dadurch gekennzeichnet, dass**
- die Eigen-Informationen vor deren Übertragung (EIN2,EIN2') zu dem Kommunikationsendgerät (KEG) durch den Präsenzrechner (PR) derart aufbereitet werden, dass sie mittels eines Präsenzdaten-Ausgabeprogramms durch das Kommunikationsendgerät (KEG) ausgebbar sind.
